(19)

**Europäisches Patentamt**
**European Patent Office**
**Office européen des brevets**

(11) **EP 4 478 620 A1**

(12) **EUROPEAN PATENT APPLICATION**
published in accordance with Art. 153(4) EPC

(43) Date of publication:
**18.12.2024 Bulletin 2024/51**

(21) Application number: **23778000.2**

(22) Date of filing: **23.03.2023**

(51) International Patent Classification (IPC):
**H04B 7/0426** (2017.01)

(52) Cooperative Patent Classification (CPC):
**H04B 7/0426; H04L 27/08; H04L 27/18**

(86) International application number:
**PCT/CN2023/083400**

(87) International publication number:
**WO 2023/185631 (05.10.2023 Gazette 2023/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.03.2022 CN 202210314023**

(71) Applicant: **Huawei Technologies Co., Ltd.**
**Shenzhen, Guangdong 518129 (CN)**

(72) Inventors:
• **TANG, Yujian**
**Shenzhen, Guangdong 518129 (CN)**

• **LIU, Jiachen**
**Shenzhen, Guangdong 518129 (CN)**
• **SU, Yu**
**Shenzhen, Guangdong 518129 (CN)**
• **WANG, Lang**
**Shenzhen, Guangdong 518129 (CN)**
• **CHEN, Jun**
**Shenzhen, Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **INTELLIGENT REFLECTING SURFACE, SIGNAL SENDING METHOD AND APPARATUS, AND STORAGE MEDIUM**

(57) Embodiments of this application disclose an intelligent reflection surface, a signal sending method and apparatus, and a storage medium, and belong to the field of wireless communication. In embodiments of this application, the intelligent reflection surface receives adjustment information sent by a first wireless device, and adjusts an on/off state of the intelligent reflection surface based on the adjustment information. Because the adjustment information is sent by the first wireless device based on response of a second wireless device to a first signal sent by the first wireless device, the adjustment information may be used to adjust a plurality of array elements included in the intelligent reflection surface to more appropriate on/off states. In this way, the plurality of array elements can adjust a received second signal sent by the first wireless device to a more appropriate phase, to reduce a probability that the second signal is severely attenuated due to reflection of a plurality of reflectors, and improve an effect of communication between the first wireless device and the second wireless device.

FIG. 2

## Description

This application claims priority to Chinese Patent Application No. 202210314023.4, filed on March 28, 2022 and entitled "INTELLIGENT REFLECTION SURFACE, SIGNAL SENDING METHOD AND APPARATUS, AND STORAGE MEDIUM", which is incorporated herein by reference in its entirety.

## TECHNICAL FIELD

Embodiments of this application relate to the field of wireless communication, and in particular, to an intelligent reflection surface, a signal sending method and apparatus, and a storage medium.

## BACKGROUND

In a wireless communication process, a wireless narrowband system is susceptible to environment. For example, in an indoor scenario with a large quantity of reflectors, a signal may be reflected by a plurality of reflectors during transmission from a transmit point to a receive point. Consequently, a multipath phenomenon occurs in the transmission process of the signal. Reflectors on different paths may differently change amplitudes, phases, and transmission directions of signals that are incident to surfaces of the reflectors. In this case, the signals on the plurality of paths may be superimposed with a same amplitude and opposite phases. Consequently, the signals are severely attenuated, and further, the receive point cannot receive the signals or the received signals are weak. For example, in a radio frequency identification (radio frequency identification, RFID) system, when an RFID reader/writer inventories an RFID tag, a signal that carries an inventory command and that is sent by the RFID reader/writer may be severely attenuated due to reflection of the plurality of reflectors. Consequently, the RFID tag cannot receive the signal, resulting in an inventory failure. In view of this, there is an urgent need to provide a signal sending method to improve a communication effect of wireless communication.

## SUMMARY

Embodiments of this application provide an intelligent reflection surface, a signal sending method and apparatus, and a storage medium, to resolve a problem that a signal is severely attenuated due to reflection of a plurality of reflectors, and improve a communication effect of wireless communication. The technical solutions are as follows.

According to a first aspect, an intelligent reflection surface is provided. The intelligent reflection surface includes a plurality of array elements. Each of the plurality of array elements is configured to: when receiving a first signal sent by a first wireless device, send the first signal to a second wireless device; receive adjustment information sent by the first wireless device, where the adjustment information is sent by the first wireless device based on response of the second wireless device to the first signal; adjust an on/off state of the array element based on the adjustment information; and when receiving a second signal sent by the first wireless device, send the second signal to the second wireless device.

In this embodiment of this application, the intelligent reflection surface may receive the adjustment information sent by the first wireless device, and adjust an on/off state of the intelligent reflection surface based on the adjustment information. Because the adjustment information is sent by the first wireless device based on the response of the second wireless device to the first signal sent by the first wireless device, the adjustment information may be used to adjust the plurality of array elements included in the intelligent reflection surface to more appropriate on/off states. In this way, the plurality of array elements can adjust the received second signal sent by the first wireless device to a more appropriate phase, to reduce a probability that the second signal is severely attenuated due to reflection of a plurality of reflectors, and improve an effect of communication between the first wireless device and the second wireless device. In addition, each of the plurality of array elements included in the intelligent reflection surface can receive the adjustment information sent by the first wireless device, and adjust the on/off state of the array element based on the adjustment information. In this way, a controller does not need to be disposed in the intelligent reflection surface to receive the adjustment information. This reduces production costs of the intelligent reflection surface.

Optionally, each of the plurality of array elements includes a passive integrated circuit (integrated circuit, IC), and the passive IC includes an amplitude phase control circuit and a signaling communication circuit. The signaling communication circuit is connected to the amplitude phase control circuit. The signaling communication circuit is configured to receive the adjustment information, and control an on/off state of the amplitude phase control circuit based on the adjustment information. The amplitude phase control circuit is configured to adjust, in an on state, a phase and/or an amplitude of a to-be-sent signal.

In this embodiment of this application, the signaling communication circuit is disposed in each array element, the adjustment information may be received by using the signaling communication circuit, and an on/off state of a corresponding amplitude phase control circuit is adjusted based on the received adjustment information. In this way, a controller does not need to be disposed in the intelligent reflection surface. This reduces production costs of the intelligent reflection surface. The amplitude phase control circuit may be a diode, a micro-electro-mechanical system (micro-electro-mechanical system, MEMS), or a metal semiconductor field effect transistor (metal-oxide-semiconductor field-effect transistor, MOSFET).

Optionally, the passive IC further includes an energy collection circuit. The energy collection circuit is separately connected to the signaling communication circuit and the amplitude phase control circuit. The energy collection circuit is configured to collect energy of an electromagnetic wave in an ambient environment, and supply power to the amplitude phase control circuit and the signaling communication circuit by using the collected energy.

In this embodiment of this application, the energy collection circuit included in the passive IC may collect the energy of the electromagnetic wave in the ambient environment, and supply power to the amplitude phase control circuit and the signaling communication circuit by using the collected energy, so that the intelligent reflection surface does not need to be powered by an external power supply. This reduces use costs, and enhances ease of deployment of the intelligent reflection surface.

Optionally, each array element further includes an antenna, and the antenna is configured to transmit a signal adjusted by the amplitude phase control circuit. The antenna includes a metal patch and a substrate. The substrate includes an insulation layer and a metal layer. One end of the passive IC is connected to the metal patch, and another end of the passive IC is connected to the metal layer of the substrate through the insulation layer of the substrate. A material of the insulation layer of the substrate is a flexible material.

In this embodiment of this application, the material of the insulation layer of the substrate is the flexible material, for example, plastic or paper. This reduces production costs of the intelligent reflection surface, and enhances ease of deployment of the intelligent reflection surface.

According to a second aspect, a signal sending method is provided, applied to a first wireless device. The method includes: sending a first signal to a second wireless device by using an intelligent reflection surface, where the intelligent reflection surface includes a plurality of array elements; sending adjustment information to the intelligent reflection surface based on response of the second wireless device to the first signal, where the adjustment information is used to adjust on/off states of the plurality of array elements; and sending a second signal to the second wireless device by using an adjusted intelligent reflection surface.

In this embodiment of this application, the array elements that are included in the intelligent reflection surface and that are in different on/off states can perform different adjustment on a phase and/or an amplitude of a wireless signal sent by the first wireless device. Therefore, the on/off states of the plurality of array elements included in the intelligent reflection surface are adjusted based on the response of the second wireless device to the first signal sent by the first wireless device, so that the plurality of array elements can adjust the second signal sent by the first wireless device to a more appropriate phase, to reduce a probability that the second signal is severely attenuated due to reflection of a plurality of reflectors. In this way, an effect of communication between the first wireless device and the second wireless device can be improved.

Optionally, an implementation process of sending the first signal to the second wireless device by using the intelligent reflection surface is: sending initial configuration information to the intelligent reflection surface, where the initial configuration information is used to perform initial configuration on the on/off states of the plurality of array elements; and sending the first signal to the second wireless device by using an initially configured intelligent reflection surface.

Optionally, an implementation process of sending the adjustment information to the intelligent reflection surface based on the response of the second wireless device to the first signal is: when receiving no response signal of the second wireless device to the first signal, sending the adjustment information to the intelligent reflection surface based on the initial configuration information. Because the first wireless device receives no response signal of the second wireless device to the first signal, it indicates that the first signal is still severely attenuated after the plurality of array elements included in the intelligent reflection surface perform phase and/or amplitude adjustment on the first signal. Consequently, the first wireless device and the second wireless device cannot normally communicate with each other. Therefore, the on/off state of each array element needs to be adjusted. In this case, the adjustment information may be generated based on the initial configuration information, and the adjustment information is sent to the intelligent reflection surface. In this way, the plurality of array elements included in the intelligent reflection surface may adjust the on/off states of the plurality of array elements based on the adjustment information, so that a plurality of adjusted array elements can adjust the first signal to an appropriate phase, to reduce attenuation of a signal sent by the first wireless device. This enhances an effect of communication between the first wireless device and the second wireless device.

Optionally, an implementation process of sending the adjustment information to the intelligent reflection surface based on the response of the second wireless device to the first signal is: when receiving a response signal of the second wireless device to the first signal, sending the adjustment information to the intelligent reflection surface based on a signal strength of the response signal and the initial configuration information.

For example, the first wireless device may start timing when sending the first signal. If the response signal of the second wireless device to the first signal is received within preset duration, the signal strength of the response signal may be first determined. If the signal strength of the received response signal is not greater than a signal strength threshold, it indicates that an effect of communication between the first wireless device and the second wireless device is poor, and the on/off state of the array element needs to be adjusted to enhance the effect of the communication. In this case, the adjustment information may be sent to the intelligent reflection surface. If the signal strength of the response signal is greater than a signal strength threshold, it indicates that an effect of communication between the first wireless device and the second wireless device is good, and a communication requirement can be met. In other words, each array element obtained through initial configuration is in an appropriate on/off state. In this case, sending the adjustment information to the intelligent reflection surface may be stopped, to avoid a case in which the effect of the communication is affected by blindly adjusting the on/off state of each array element based on the adjustment information.

Optionally, the adjustment information includes configuration content, a configuration mode, a quantity of to-be-configured array elements, and an initial to-be-configured array element, the configuration content includes a plurality of pieces of bit data configured for the to-be-configured array elements, and the configuration mode indicates a to-be-configured array element corresponding to each of the plurality of pieces of bit data.

Optionally, if the first wireless device is a radio frequency identification RFID reader/writer, and the second wireless device is an RFID tag, the first signal may be an inventory command for the RFID reader/writer to inventory the RFID tag.

Optionally, the first wireless device may alternatively be a base station in NB-IoT, and the second wireless device is an NB-IoT terminal. In this case, the first signal may be a data obtaining command. For example, when the NB-IoT terminal is a gas meter, the data obtaining command may be used to obtain gas data recorded in the gas meter. Alternatively, the first wireless device may be a wireless AP, and the second wireless device is a terminal device that accesses a network through the wireless AP. The first signal may be a signal, such as a sounding signal or a test signal, to be responded by the terminal device. This is not limited in this embodiment of this application.

Optionally, each of the plurality of array elements includes a passive integrated circuit IC, and the passive IC includes an amplitude phase control circuit and a signaling communication circuit. The sending adjustment information to the intelligent reflection surface includes: sending the adjustment information to the signaling communication circuit of each array element. The signaling communication circuit is configured to control an on/off state of the amplitude phase control circuit based on the adjustment information. The amplitude phase control circuit is configured to perform, in different states, different adjustment on a phase and/or an amplitude of a to-be-sent signal.

Optionally, the passive IC further includes an energy collection circuit. The energy collection circuit is configured to collect energy of an electromagnetic wave in an ambient environment, and supply power to the amplitude phase control circuit and the signaling communication circuit by using the collected energy.

According to a third aspect, a signal sending apparatus is provided, used in a first wireless device. The signal sending apparatus has a function of implementing behavior of the signal sending method in the second aspect. The signal sending apparatus includes at least one module. For example, the at least one module may include a sending module and an adjustment module.

The sending module is configured to send a first signal to a second wireless device by using an intelligent reflection surface, where the intelligent reflection surface includes a plurality of array elements. The adjustment module is configured to send adjustment information to the intelligent reflection surface based on response of the second wireless device to the first signal, where the adjustment information is used to adjust on/off states of the plurality of array elements. The sending module is further configured to send a second signal to the second wireless device by using an adjusted intelligent reflection surface.

Optionally, the sending module is configured to: send initial configuration information to the intelligent reflection surface, where the initial configuration information is used to perform initial configuration on the on/off states of the plurality of array elements; and send the first signal to the second wireless device by using an initially configured intelligent reflection surface.

Optionally, the adjustment module is configured to: when no response signal of the second wireless device to the first signal is received, send the adjustment information to the intelligent reflection surface based on the initial configuration information.

Optionally, the adjustment module is configured to: when a response signal of the second wireless device to the first signal is received, send the adjustment information to the intelligent reflection surface based on a signal strength of the response signal and the initial configuration information.

Optionally, the adjustment information includes configuration content, a configuration mode, a quantity of to-be-configured array elements, and an initial to-be-configured array element, the configuration content includes a plurality of pieces of bit data configured for the to-be-configured array elements, and the configuration mode indicates a to-be-configured array element corresponding to each of the plurality of pieces of bit data.

Optionally, the first wireless device is a radio frequency identification RFID reader/writer, and the second wireless device is an RFID tag.

Optionally, each of the plurality of array elements includes a passive integrated circuit IC, and the passive IC includes an amplitude phase control circuit and a signaling communication circuit. The adjustment module is specifically configured to send the adjustment information to the signaling communication circuit of each array element. The signaling communication circuit is configured to control an on/off state of the amplitude phase control circuit based on the adjustment information. The amplitude phase control circuit is configured to perform, in different states, different adjustment on a phase and/or an amplitude of a to-be-sent signal.

Optionally, the passive IC further includes an energy collection circuit. The energy collection circuit is configured to collect energy of an electromagnetic wave in an ambient environment, and supply power to the amplitude phase control circuit and the signaling communication circuit by using the collected energy.

According to a fourth aspect, a signal sending apparatus is provided. A structure of the signal sending apparatus includes a processor and a memory. The memory is configured to store a program that supports the signal sending apparatus in performing the signal sending method provided in the second aspect, and store data used to implement the signal sending method provided in the second aspect. The processor is configured to execute the program stored in the memory. An operation apparatus of a storage device may further include a communication bus, and the communication bus is configured to establish a connection between the processor and the memory.

According to a fifth aspect, a computer-readable storage medium is provided. The computer-readable storage medium stores instructions. When the instructions are run on a computer, the computer is enabled to perform the signal sending method according to the second aspect.

According to a sixth aspect, a computer program product including instructions is provided. When the computer program product runs on a computer, the computer is enabled to perform the signal sending method according to the second aspect.

Technical effects achieved by the fourth aspect, the fifth aspect, and the sixth aspect are similar to the technical effects achieved by corresponding technical means in the second aspect. Details are not described herein again.

Beneficial effects brought by the technical solutions provided in embodiments of this application include at least the following technical effects.

In embodiments of this application, the intelligent reflection surface may receive the adjustment information sent by the first wireless device, and adjust the on/off state of the intelligent reflection surface based on the adjustment information. Because the adjustment information is sent by the first wireless device based on the response of the second wireless device to the first signal sent by the first wireless device, the adjustment information may be used to adjust the plurality of array elements included in the intelligent reflection surface to more appropriate on/off states. In this way, the plurality of array elements can adjust the received second signal sent by the first wireless device to a more appropriate phase, to reduce signal attenuation of the second signal caused by reflection of the plurality of reflectors, and improve the effect of the communication between the first wireless device and the second wireless device. In addition, each of the plurality of array elements included in the intelligent reflection surface can receive the adjustment information sent by the first wireless device, and adjust the on/off state of the array element based on the adjustment information. In this way, a controller does not need to be disposed in the intelligent reflection surface to receive the adjustment information. This reduces production costs of the intelligent reflection surface.

**BRIEF DESCRIPTION OF DRAWINGS**

FIG. 1 is an architectural diagram of a system related to a signal sending method according to an embodiment of this application;
FIG. 2 is a diagram of a structure of an intelligent reflection surface according to an embodiment of this application;
FIG. 3 is a diagram of a structure of an array element according to an embodiment of this application;
FIG. 4 is a diagram of a structure of a wireless device according to an embodiment of this application;
FIG. 5 is a flowchart of a signal sending method according to an embodiment of this application;
FIG. 6 is a flowchart of inventorying an RFID tag by an RFID reader/writer according to an embodiment of this application; and
FIG. 7 is a diagram of a structure of a signal sending apparatus according to an embodiment of this application.

**DESCRIPTION OF EMBODIMENTS**

To make objectives, technical solutions, and advantages of embodiments of this application clearer, the following further describes implementations of this application in detail with reference to the accompanying drawings.

An application scenario of embodiments of this application is first described before embodiments of this application are described in detail.

In an indoor scenario with a large quantity of reflectors, a signal may be reflected by a plurality of reflectors during transmission from a transmit point to a receive point. Consequently, a multipath phenomenon occurs in the transmission process of the signal. Reflectors on different paths may differently change amplitudes, phases, and transmission directions of signals that are incident to surfaces of the reflectors. In this case, the signals on the plurality of paths may be superimposed with a same amplitude and opposite phases. Consequently, the signals are severely attenuated, and further, the receive point cannot receive the signals or the received signals are weak.

For example, when an RFID reader/writer is used to inventory an RFID tag, a signal that carries an inventory command and that is sent by the RFID reader/writer may be severely attenuated due to reflection of the plurality of reflectors. Consequently, the RFID tag cannot receive the signal, resulting in an inventory failure.

For another example, in a narrowband internet of things (narrowband internet of things, NB-IoT), a signal that carries a data obtaining command and that is sent by a base station to an NB-IoT terminal may be reflected by a plurality of indoor reflectors. Consequently, the signal is severely attenuated. As a result, the NB-IoT terminal cannot receive the signal sent by the base station. For example, the base station may send a signal that carries a data obtaining command to an NB-IoT gas meter, to obtain data on a gas meter in any user's home within a coverage area. Because there may be a large quantity of reflectors near installation positions of gas meters in some users' homes, the signal that carries the data obtaining command and that is sent by the base station is severely attenuated. As a result, the gas meter cannot receive the signal sent by the base station.

For another example, in a wireless local area network (wireless local area network, WLAN)/or cellular communication, in an indoor scenario with a large quantity of reflectors, a wireless signal sent by a wireless access point (access point, AP)/base station may be reflected by the plurality of indoor reflectors, and is severely attenuated. As a result, a terminal device located in an indoor position cannot receive the wireless signal or the received wireless signal is weak.

A signal sending method provided in embodiments of this application may be applied to various communication scenarios described above. An intelligent reflection surface is disposed at a corresponding position on an indoor wall, and a plurality of array elements included in the intelligent reflection surface adjust a phase and/or an amplitude of the wireless signal sent by a transmit point in the foregoing scenario, to reduce a probability of signal attenuation caused by superposition with a same amplitude and opposite phases in a transmission process of the wireless signal, and enhance a strength of the wireless signal received by a receive point.

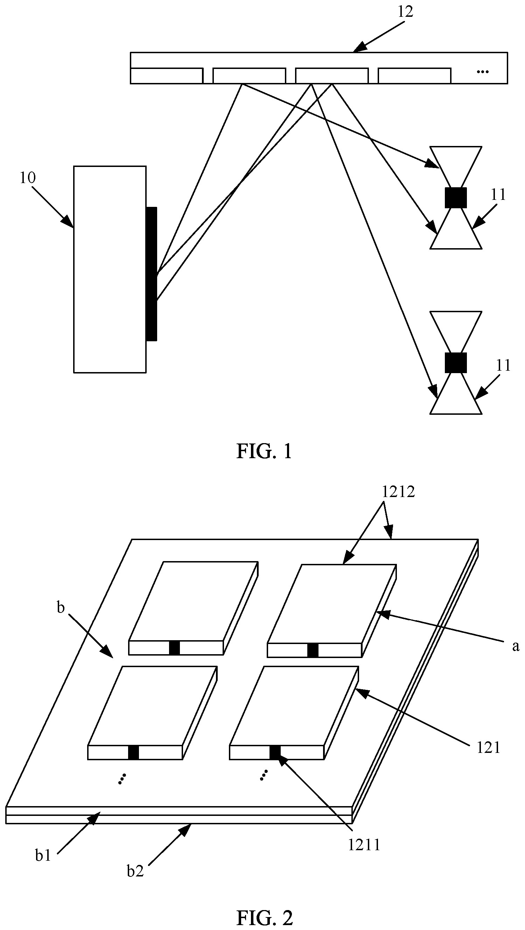

FIG. 1 is an architectural diagram of a system related to a signal sending method according to an embodiment of this application. As shown in FIG. 1, the system includes one first wireless device 10, at least one second wireless device 11, and at least one intelligent reflection surface 12. The first wireless device 10, the second wireless device 11, and the intelligent reflection surface 12 can communicate with each other.

For example, the first wireless device 10 may directly send a wireless signal to the second wireless device 11.

Alternatively, the first wireless device 10 may send a wireless signal to the second wireless device 11 by using the intelligent reflection surface 12.

For example, the first wireless device 10 sends a wireless signal to the intelligent reflection surface 12. Correspondingly, the intelligent reflection surface 12 may reflect the received wireless signal to the second wireless device 11.

Optionally, the first wireless device 10 may alternatively send, to the intelligent reflection surface 12, adjustment information used to configure the intelligent reflection surface 12. In this case, the intelligent reflection surface 12 may adjust the intelligent reflection surface 12 based on the adjustment information.

The first wireless device 10 may be a device capable of transmitting a wireless signal, such as an RFID reader/writer, a base station in NB-IoT, or a wireless AP/cellular base station. This is not limited in this embodiment of this application.

It should be noted that the second wireless device 11 may be a device capable of communicating with the first wireless device 10. For example, when the first wireless device 10 is an RFID reader/writer, the second wireless device 11 is an RFID tag; when the first wireless device 10 is a base station in NB-IoT, the second wireless device 11 is an NB-IoT terminal; or when the first wireless device 10 is a wireless AP, the second wireless device 11 is a terminal device that accesses a network through the wireless AP.

In addition, the intelligent reflection surface 12 may be shown in FIG. 2. The intelligent reflection surface 12 includes a plurality of array elements 121 (only four array elements are shown in FIG. 2, but a quantity of array elements is not limited to 4.)

Each of the plurality of array elements 121 receives the adjustment information sent by the first wireless device 10, and adjusts an on/off state of the array element 121 based on the adjustment information. Subsequently, when receiving a signal sent by the first wireless device 10 to the second wireless device 11, each of the plurality of array elements 121 may adjust a phase and/or an amplitude of the signal based on a current on/off state of the array element 121, and then reflects an adjusted signal to the second wireless device 11.

The plurality of array elements 121 may be arranged in any manner that can be implemented.

For example, the plurality of array elements 121 may be arranged in a form of a matrix, and a spacing between two adjacent array elements 121 is not greater than $\lambda/2$, for example, $\lambda/4$. $\lambda$ is a wavelength of an electromagnetic wave transmitted by the first wireless device 10.

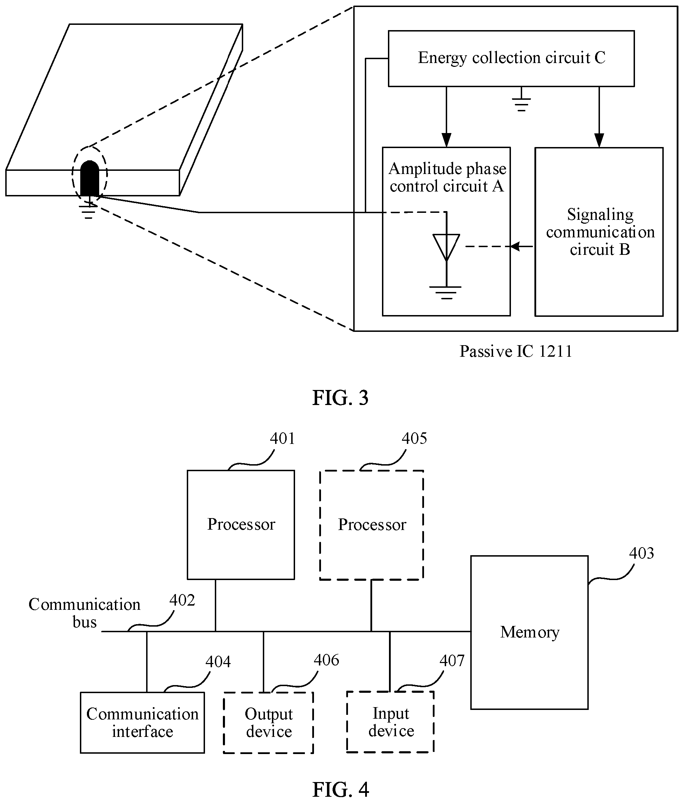

Refer to FIG. 3. Each of the plurality of array elements 121 may include a passive integrated circuit (integrated circuit, IC) 1211 and an antenna 1212. The passive IC 1211 includes an amplitude phase control circuit A and a signaling communication circuit B. The signaling communication circuit B is connected to the amplitude phase control circuit A. The signaling communication circuit B is configured to: receive the adjustment information sent by the first wireless device 10, and control an on/off state of the amplitude phase control circuit A based on the adjustment information. After the signaling communication circuit B adjusts the on/off state of the corresponding amplitude phase control circuit A, the amplitude phase control circuit A may receive, via the antenna 1212, a signal sent by the first wireless device 10, adjust a phase and/or an amplitude of the received signal, and then send an adjusted signal to the second wireless device 11 via the antenna 1212.

It should be noted that the amplitude phase control circuit A may be a diode, a micro-electro-mechanical system (micro-electro-mechanical system, MEMS), or a metal semiconductor field effect transistor (metal-oxide-semiconductor field-effect transistor, MOSFET).

When the amplitude phase control circuit A is a diode, one end of the diode is connected to the antenna included in the array element 121, and the other end is grounded. When the diode is conducted, in other words, when the amplitude phase control circuit A is in an on state, the amplitude phase control circuit A may be equivalent to an inductor and a resistor that are connected in series. In this case, the amplitude phase control circuit A may adjust a phase of a signal by superimposing a first phase to the signal received by the antenna. When the diode is cut off, in other words, when the amplitude phase control circuit A is in an off state, the amplitude phase control circuit A may be equivalent to a capacitor and a resistor that are connected in parallel. In this case, the amplitude phase control circuit A may adjust a phase of a signal by superimposing a second phase to the signal.

It should be noted that the first phase is different from the second phase. For example, a difference between the first phase and the second phase may be 180°. In this case, when adjustment is performed on the phase of the signal in different states, a difference between phases of an adjusted signal can also be large.

In addition, the passive IC 1211 may further include an energy collection circuit C. The energy collection circuit C is separately connected to the signaling communication circuit B and the amplitude phase control circuit A. The energy collection circuit C is configured to collect energy of an electromagnetic wave in an ambient environment, and supply power to the amplitude phase control circuit A and the signaling communication circuit B by using the collected energy. For example, the energy collection circuit C may be configured to collect energy of an electromagnetic wave transmitted by the first wireless device 10, to supply power to the amplitude phase control circuit A and the signaling communication circuit B by using the collected energy.

Optionally, in another possible implementation, the passive IC 1211 may not include an energy collection circuit C, but includes a power supply. The power supply may supply power to the amplitude phase control circuit A and the signaling communication circuit B. The power supply may be an alternating current power supply, or may be a dry cell battery or a battery. This is not limited in this embodiment of this application.

The antenna 1212 includes a metal patch a and a substrate b. The substrate b includes an insulation layer b1 and a metal layer b2. One end of the passive IC 1211 is connected to the metal patch a, and another end of the passive IC 1211 is connected to the metal layer b2 of the substrate through the insulation layer b1 of the substrate.

It should be noted that the end that is of the passive IC 1211 and that is connected to the metal patch a may be connected to an edge of the metal patch a (as shown in FIG. 2), or may be connected to any position on a surface that is of the metal patch a and that is close to the insulation layer b1 of the substrate. This is not limited in this embodiment of this application.

In addition, a material of the insulation layer b1 of the substrate is a flexible material, for example, plastic or paper, or may be another flexible material. This is not limited in this embodiment of this application.

Optionally, in another implementation, the intelligent reflection surface 12 may include a controller and a plurality of array elements, and each of the plurality of array elements does not include a signaling communication circuit B or an energy collection circuit C. The controller may be connected to each of the plurality of array elements over a wired network.

Based on this, the first wireless device 10 may send the adjustment information to the controller of the intelligent transmit surface. After receiving the adjustment information, the controller controls an on/off state of each of the plurality of array elements based on the adjustment information. In this case, after receiving a signal sent by the first wireless device 10, each array element may subsequently adjust a phase and/or an amplitude of the signal based on a current state of the array element, and then send an adjusted signal to the second wireless device 11.

The controller may be a field programmable gate array (field programmable gate array, FPGA), a single-chip microcomputer, or another component that can control the on/off state of the array element. This is not limited in this embodiment of this application.

In addition, each of the plurality of array elements includes an amplitude phase control circuit and an antenna. The controller is connected to the amplitude phase control circuit of each array element. The controller may control, based on the received adjustment information, an on/off state of the amplitude phase control circuit included in each array element. In this case, when receiving, via the antenna, a signal sent by the first wireless device 10, any array element in the plurality of array elements may adjust a phase and/or an amplitude of the signal based on a current on/off state of the array element, and send an adjusted signal to the second wireless device 11.

Optionally, the intelligent reflection surface 12 further includes a power supply, and the power supply may supply power to the controller and the amplitude phase control circuit included in each array element. The power supply may be an alternating current power supply, or may be a dry cell battery or a battery. This is not limited in this embodiment of this application.

FIG. 4 is a diagram of a structure of a wireless device according to an embodiment of this application. Refer to FIG. 4. The first wireless device and the second wireless device in the system that is related to the signal sending method and that is shown in FIG. 1 may be implemented by using the wireless device shown in FIG. 4. The wireless device includes at least one processor 401, a communication bus 402, a memory 403, and at least one communication interface 404.

The processor 401 may be a general-purpose central processing unit (central processing unit, CPU), an application-specific integrated circuit (application-specific integrated circuit, ASIC), or one or more integrated circuits configured to control program execution of solutions of this application.

The communication bus 402 may include a path on which information is transmitted between the foregoing components.

The memory 403 may be a read-only memory (read-only memory, ROM) or another type of static storage device that can store static information and instructions, a random access memory (random access memory, RAM) or another type of dynamic storage device that can store information and instructions, an electrically erasable programmable read-only memory (electrically erasable programmable read-only memory, EEPROM), a compact disc read-only memory (compact disc read-only Memory, CD-ROM) or another compact disc storage, an optical disc storage (including a compact disc, a laser disc, an optical disc, a digital versatile disc, a Blu-ray disc, or the like), a magnetic disk or another magnetic storage device, or any other medium that can be configured to carry or store expected program code in a form of an instruction or a data structure and that can be accessed by a computer, but is not limited thereto. The memory 403 may exist independently, and is connected to the processor 401 through the communication bus 402. Alternatively, the memory 403 may be integrated with the processor 401.

The memory 403 is configured to store program code used to execute the solutions of this application, and the processor 401 controls execution. The processor 401 is configured to execute the program code stored in the memory 403. The program code may include one or more software modules. The first wireless device in the system that is related to the signal sending method and that is shown in FIG. 1 may send a signal to the second wireless device by using the processor 401 and one or more software modules in the program code in the memory 403.

The communication interface 404 is any apparatus such as a transceiver, and is configured to communicate with another device or a communication network, for example, an Ethernet, a radio access network (radio access network, RAN), or a wireless local area network (wireless local area network, WLAN).

During specific implementation, in an embodiment, the wireless device may include a plurality of processors, for example, the processor 401 and a processor 405 shown in FIG. 4. Each of the processors may be a single-core (single-CPU) processor, or may be a multi-core (multi-CPU) processor. The processor herein may be one or more devices, circuits, and/or processing cores configured to process data (for example, computer program instructions).

During specific implementation, in an embodiment, the wireless device may further include an output device 406 and an input device 407. The output device 406 communicates with the processor 401, and may display information in a plurality of manners. For example, the output device 406 may be a liquid crystal display (liquid crystal display, LCD), a light emitting diode (light emitting diode, LED) display device, a cathode ray tube (cathode ray tube, CRT) display device, a projector (projector), or the like. The input device 407 communicates with the processor 401, and may receive an input from a user in a plurality of manners. For example, the input device 407 may be a mouse, a keyboard, a touchscreen device, a sensing device, or the like.

The foregoing wireless device may be a general-purpose wireless device or a dedicated wireless device. During specific implementation, the wireless device may be an RFID reader/writer, a central base station, a wireless AP, an RFID tag, an NB-IoT terminal, or a mobile phone terminal. A type of the wireless device is not limited in this embodiment of this application.

The following describes a signal sending method provided in embodiments of this application.

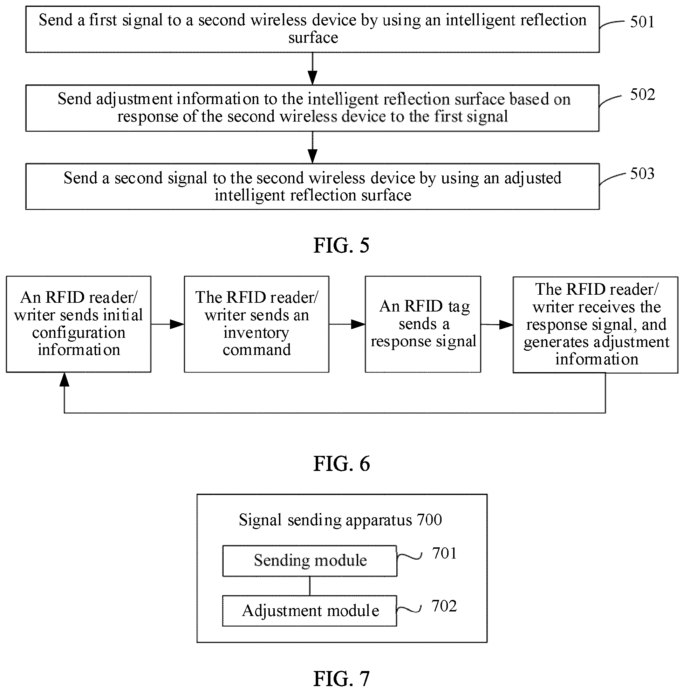

FIG. 5 is a flowchart of a signal sending method according to an embodiment of this application. The method may be applied to the first wireless device included in the foregoing signal sending system. Refer to FIG. 5, the method includes the following steps.

**Step 501:** Send a first signal to a second wireless device by using an intelligent reflection surface.

In an implementation, the first wireless device sends initial configuration information to the intelligent reflection surface, performs, based on the initial configuration information, initial configuration on on/off states of a plurality of array elements included in the intelligent reflection surface, and sends the first signal to the second wireless device by using an initially configured intelligent reflection surface.

For example, the first wireless device may first generate the initial configuration information used to configure the plurality of array elements, and then send the initial configuration information to the intelligent reflection surface.

The first wireless device may obtain a quantity of to-be-configured array elements, and obtain original configuration data based on the quantity of to-be-configured array elements. The original configuration data includes bit data of a same quantity of bits as the quantity of to-be-configured array elements, and each piece of bit data corresponds to one to-be-configured array element. After obtaining the original configuration data, the first wireless device may determine a configuration mode according to a distribution rule between bit data in the original configuration data, and generate configuration content based on the original configuration data and the configuration mode. In addition, the first wireless device may further determine an initial to-be-configured array element, and then generate the initial configuration information based on the configuration mode, the initial to-be-configured array element, and the configuration content.

It should be noted that the original configuration data may be pre-stored in the first wireless device. For example, each piece of bit data in the original configuration data is 0.

Optionally, the first wireless device may obtain the original configuration data by using simulation software.

It should be noted that, in this embodiment of this application, a wireless communication process between the first wireless device, a plurality of second wireless devices, and the intelligent reflection surface may be simulated by using the simulation software based on a three-dimensional coordinate of the first wireless device, three-dimensional coordinates of the plurality of second wireless devices, and a three-dimensional coordinate of each array element included in the intelligent reflection surface in an actual scenario, to generate a plurality of pieces of configuration data. Based on this, the first wireless device may obtain, as the original configuration data, one piece of configuration data from the plurality of pieces of configuration data.

For example, the simulation software obtains the three-dimensional coordinate of the first wireless device, the three-dimensional coordinates of the plurality of second wireless devices, and the three-dimensional coordinate of each array element included in the intelligent reflection surface, and simulates configuring of a $1^{st}$ piece of configuration data $w_1$ for the plurality of array elements included in the intelligent reflection surface. Then, a $1^{st}$ device set is obtained, where the $1^{st}$ device set includes all second wireless devices. Then, a wireless communication process between the first wireless device, the plurality of second wireless devices in the $1^{st}$ device set, and the intelligent reflection surface is simulated based on the three-dimensional coordinate of the first wireless device, a three-dimensional coordinate of each second wireless device in the $1^{st}$ device set, and a three-dimensional coordinate of the intelligent reflection surface, and an energy value of an electromagnetic wave signal that is sent by the first wireless device and that is received by each second wireless device in the $1^{st}$ device set in the simulated communication process is calculated, to obtain a $1^{st}$ energy value set { $P_m^{(1)}$ m=1, 2...M}. M represents a quantity of second wireless devices in the $1^{st}$ device set, m represents an $m^{th}$ second wireless device in the M second wireless devices, and $P_m^{(1)}$ represents an energy value of an electromagnetic wave that is sent by the first wireless device and that is received by the $m^{th}$ second wireless device when the $1^{st}$ piece of configuration data $w_1$ is configured for the plurality of array elements included in the intelligent reflection surface.

After the $1^{st}$ energy value set is obtained, an energy value greater than an energy threshold is deleted from the $1^{st}$ energy value set, to obtain an updated $1^{st}$ energy value set { $P_m^{'(1)}$ m=1, 2..M'} . A loss function is constructed based on energy values in the updated $1^{st}$ energy value set, where the obtained loss function is $Q = \sum_{m=1}^{M'} \left( P_m^{'(1)} \right)^2$ . Then, a $2^{nd}$ piece of configuration data $w_2$ is calculated by using the following formula (1):

$$w_2 = w_1 + \eta * \forall_w Q \quad (1)$$

where $\eta$ is a preset coefficient for controlling a quantity of iterations performed on $\forall_w Q$ , and $\forall_w$ represents calculating a gradient of Q.

After the $2^{nd}$ piece of configuration data $w_2$ is obtained, configuring the $2^{nd}$ piece of configuration data $w_2$ for the plurality of array elements included in the intelligent reflection surface is simulated, and the $1^{st}$ device set is updated based on the updated $1^{st}$ energy value set, to obtain a $2^{nd}$ device set. The $2^{nd}$ device set includes a second wireless device corresponding to the energy value in the updated $1^{st}$ energy value set. Then, the simulation software may simulate a communication process again based on a three-dimensional coordinate of the second wireless device in the $2^{nd}$ device set, the three-dimensional coordinate of the intelligent reflection surface, and the three-dimensional coordinate of the first wireless device with reference to the foregoing described method, to calculate a $3^{rd}$ piece of configuration data based on an energy value of an electromagnetic wave signal that is sent by the first wireless device and that is received by each second wireless device in the $2^{nd}$ device set. By analogy, after an $n^{th}$ piece of configuration data is obtained, when an $n^{th}$ device set determined based on energy values in an updated $(n-1)^{th}$ energy value set is NULL, in other words, the updated $(n-1)^{th}$ energy value set is NULL, simulation is stopped. In this case, n pieces of configuration data obtained through calculation are the plurality of pieces of configuration data generated by the simulation software.

After obtaining the original configuration data, the first wireless device may determine, starting from the most significant bit data of the original configuration data, the distribution rule of the plurality of pieces of bit data included in the original configuration data, and then determine the configuration mode according to the distribution rule. The configuration mode indicates a quantity of to-be-configured array elements corresponding to each piece of bit data in the configuration content. For example, the configuration mode may be a first value.

For example, it is assumed that, starting from the most significant bit data of the original configuration data, three pieces of bit data are used as one block for division, and three pieces of bit data in each block are the same. In this case, it may be determined that the configuration mode is 3. In this case, the configuration mode indicates that each piece of bit data is used to configure three to-be-configured array elements.

In addition, in this embodiment of this application, the first value may be represented by using a 3-bit binary number. For example, when each of the plurality of pieces of bit data corresponds to one array element, the configuration mode may be represented by 000. Assuming that each piece of bit data corresponds to two array elements, the configuration mode may be represented by 001, and so on.

After determining the configuration mode, the first wireless device may divide the original configuration data into a plurality of blocks starting from the most significant bit data of the original configuration data based on the configuration mode, where a quantity of bits of bit data included in each block is equal to the first value. Then, one piece of bit data is obtained from each block, and obtained bit data is arranged based on a sequence of corresponding blocks, to obtain the configuration content.

For example, assuming that the first value is 2, and the original configuration data is 0011 0011 1111 1100 1, starting from the most significant bit data, the original configuration data may be divided into nine blocks, which are respectively 00 1100 11 11 11 11 001. Then, one piece of data is selected from each block based on a sequence of the blocks, and obtained configuration content is 0101 1110 1.

After obtaining the configuration content, the first wireless device may further determine a quantity of bits of bit data included in the configuration content, in other words, determine a length of the configuration content. Correspondingly, the initial configuration information may further include the length of the configuration content.

For example, the configuration content is 0101 1110 1. A quantity of bits of bit data included in the configuration content is 9. In this case, the length of the configuration content is 9. Correspondingly, the initial configuration information may include the length of the configuration content represented by a binary number 00 0001 0001.

In addition, in this embodiment of this application, each array element has an identity document (Identity document, ID), the ID of each array element may be a number of a corresponding array element, and numbers of the plurality of array elements are consecutive. Alternatively, the plurality of array elements may be divided into a plurality of array element blocks, and array elements included in each array element block have a same identity document. Based on this, after determining the initial to-be-configured array element, the first wireless device may convert an ID of the initial to-be-configured array element into a binary number. For example, if an array element whose ID is 9 is used as an initial to-be-configured array element, a binary number 00 0000 1001 may be used to indicate the initial to-be-configured array element.

Optionally, before initial configuration is performed on a connection/disconnection state of each array element, the first wireless device may further first write an ID into each array element.

For example, when the first wireless device is an RFID reader/writer, the first wireless device may write, into a passive IC of a corresponding array element based on an ISO18000-6C protocol, an ID configured for each array element, where the ID of the array element may be any integer from 0 to 1023.

It should be noted that in this embodiment of this application, when the plurality of array elements are divided into the plurality of array element blocks, the configuration mode in the initial configuration information may not be determined based on the original configuration data, but may be determined based on a quantity of array elements included in the plurality of array element blocks. In this case, the configuration mode may be the same as a quantity of array elements included in each array element block. In other words, the configuration mode indicates that one piece of bit data is configured for one array element block. Alternatively, a quantity of bits of bit data included in the original configuration data may be equal to a quantity of array element blocks. The first wireless device still determines the configuration mode in the foregoing described manner. In this case, the configuration mode indicates a quantity of array element blocks that need to be configured based on one piece of bit data.

In this embodiment of this application, the first wireless device may be a radio frequency identification RFID reader/writer, and the second wireless device is an RFID tag. When the first wireless device is an RFID reader/writer and the second wireless device is an RFID tag, after generating the initial configuration information, the first wireless device may use an RFID reader/writer command to carry the initial configuration information. The RFID reader/writer command may be a command that is in commands defined in the ISO18000-6C protocol and that is reserved for customers or manufacturers.

It should be noted that, the first wireless device may include, based on a length requirement of each field in the RFID reader/writer command, content that is in the initial configuration information and that is of a length not greater than a length requirement of a corresponding field. In addition, the RFID reader/writer command further includes a command codeword and verification content. The command codeword indicates that the initial configuration information is a configuration command for configuring the on/off state of each array element in the intelligent reflection surface, for example, 1110 0000 0100 1011. The verification content is generated based on content other than the verification content carried in the RFID reader/writer command, and is used by the intelligent reflection surface to subsequently verify authenticity of the command.

For example, assuming that the determined original configuration data is 0011 0101 1101 1100 1, when initial configuration is performed on array elements whose IDs are 1 to 17, the initial configuration information sent by the RFID reader/writer to the intelligent reflection surface may be shown in Table 1.

**Table 1 Initial configuration information 1**

| Command codeword | Configuration mode | Initial to-be-configured array element | Length of configuration content | Configuration content | Verification content |
|---|---|---|---|---|---|
| 16 bits | 3 bits | 10 bits | 10 bits | 1-1024 bits | 16 bits |
| 1110 0000 0100 1011 | 000 | 00 0000 0001 | 00 0001 0001 | 0011 0101 1101 1100 1 | 0000 0010 0110 1000 |

As shown in Table 1, the configuration mode is 000, in other words, each piece of bit data in the configuration content is used to configure one array element. The configuration content is 0011 0101 1101 1100 1. 00 0001 0001 indicates that the length of the configuration content is 17, in other words, the configuration content includes 17 pieces of bit data. 00 0000 0001 indicates that configuration starts from an array element whose ID is 1.

For example, assuming that the determined original configuration data is 0011 0011 1111 1100 1, when initial configuration is performed on array elements whose IDs are 1 to 17, the initial configuration information sent by the RFID reader/writer to the intelligent reflection surface may be shown in Table 2.

**Table 2 Initial configuration information 2**

| Command codeword | Configuration mode | Initial to-be-configured array element | Length of configuration content | Configuration content | Verification content |
|---|---|---|---|---|---|
| 16 bits | 3 bits | 10 bits | 10 bits | 1-1024 bits | 16 bits |
| 1110 0000 0100 1011 | 001 | 00 0000 0001 | 00 0000 1001 | 0101 1110 1 | 1100 0000 1001 0101 |

As shown in Table 2, the configuration mode is 001, in other words, each piece of bit data in the configuration content is used to configure two array elements. In this way, the configuration content obtained based on the original configuration data is 0101 1110 1. 00 0000 1001 indicates that the length of the configuration content is 9, in other words, nine pieces of bit data are included. 00 0000 0001 indicates that configuration starts from the array element whose ID is 1.

For example, assuming that the determined original configuration data is 0000 1111 1111 0000 1, when initial configuration is performed on array elements whose IDs are 1 to 17, the initial configuration information sent by the RFID reader/writer to the intelligent reflection surface may be shown in Table 3.

**Table 3 Initial configuration information 3**

| Command codeword | Configuration mode | Initial to-be-configured array element | Length of configuration content | Configuration content | Verification content |
|---|---|---|---|---|---|
| 16 bits | 3 bits | 10 bits | 10 bits | 1-1024 bits | 16 bits |
| 1110 0000 0100 1011 | 010 | 00 0000 0001 | 00 0000 0101 | 0110 1 | 1100 0110 1001 1101 |

As shown in Table 3, the configuration mode is 010, in other words, each piece of bit data in the configuration content is used to configure four array elements. The configuration content obtained based on the original configuration data is 0110 1. 00 0000 0101 indicates that the length of the configuration content is 5, in other words, the configuration content includes five pieces of bit data. 00 0000 0001 indicates that configuration starts from an array element whose ID is 1.

For example, when the original configuration data is 0000, and initial configuration is performed on array elements whose IDs are 9 to 12, the initial configuration information sent by the RFID reader/writer to the intelligent reflection surface may be shown in Table 4.

**Table 4 Initial configuration information 4**

| Command codeword | Configuration mode | Initial to-be-configured array element | Length of configuration content | Configuration content | Verification content |
|---|---|---|---|---|---|
| 16 bits | 3 bits | 10 bits | 10 bits | 1-1024 bits | 16 bits |
| 1110 0000 0100 1011 | 010 | 00 0000 1001 | 00 0000 0001 | 0 | 1100 0011 0001 1000 |

As shown in Table 4, the configuration mode is 010, in other words, each piece of bit data in the configuration content corresponds to four array elements. The configuration content obtained based on the original configuration data is 0. 00 0000 0001 indicates that the length of the configuration content is 1, in other words, the configuration content includes one piece of bit data. 00 0000 1001 indicates that configuration starts from an array element whose ID is 9.

After generating the initial configuration information, the first wireless device may send the initial configuration information to the intelligent reflection surface. Correspondingly, the intelligent reflection surface receives the initial configuration information sent by the first wireless device, and controls the on/off state of each array element based on the initial configuration information.

In an implementation, it can be learned from the foregoing descriptions that the intelligent reflection surface does not include a controller, each of the plurality of array elements includes a passive IC, and the passive IC includes an amplitude phase control circuit and a signaling communication circuit. Based on this, the first wireless device may send initial configuration information to the signaling communication circuit of each array element. Correspondingly, the signaling communication circuit of each array element receives the initial configuration information sent by the first wireless device, and performs, based on the initial configuration information, initial configuration on an on/off state of an amplitude phase control circuit corresponding to the array element.

For example, any array element is used as an example. After receiving the initial configuration information sent by the first wireless device, a signaling communication circuit of the array element may determine, from configuration content based on a configuration mode, a quantity of bits of bit data included in the configuration content, an ID of an initial to-be-configured array element, and the configuration content that are included in the initial configuration information, bit data corresponding to the array element, and control an on/off state of an amplitude phase control circuit of the array element based on the bit data corresponding to the array element. If the signaling communication circuit of the array element determines, from the configuration content, that the bit data corresponding to the array element is 1, the signaling communication circuit controls the amplitude phase control circuit of the array element to be in an on state. If the signaling communication circuit determines, from the configuration content, that the bit data corresponding to the array element is 0, the signaling communication circuit controls the amplitude phase control circuit to be in an off state.

For example, it is assumed that the configuration mode in the initial configuration information received by the signaling communication circuit is 001, the initial to-be-configured array element is 00 0000 0000, the configuration content is 0 1011 1101, the quantity of bits of bit data included in the configuration content is 00 0000 1001, and the ID of the array element is 8. Because 001 indicates that one piece of bit data corresponds to two array elements, 00 0000 1001 indicates that the configuration content includes nine bits of bit data, and 00 0000 0001 indicates that an array element whose ID is 1 is an initial to-be-configured array element, the signaling communication circuit may determine, based on the ID of the array element, that a $4^{th}$ bit data starting from the most significant bit data in the configuration content is the bit data corresponding to the array element, in other words, the bit data corresponding to the array element is 1. In this case, the signaling communication circuit may control the corresponding amplitude phase control circuit to be in the on state.

Optionally, when the initial configuration information is carried by using an RFID reader/writer command, after receiving the command, the signaling communication circuit first extracts a command codeword in the command, and determines, based on the command codeword, that the command carries configuration information used to control the on/off state of the amplitude phase control circuit. Then, the signaling communication circuit extracts content other than verification content in the command, generates to-be-compared verification content based on the extracted content, and compares the to-be-compared verification content with the verification content in the received command. If the to-be-compared verification content and the verification content in the received command are the same, it indicates that the command is a correct instruction. In this case, the bit data corresponding to the array element may be obtained from the configuration content with reference to the foregoing manner. If the to-be-compared verification content and the verification content in the received command are different, it indicates that the initial configuration information is an incorrect instruction, prompt information indicating that the initial configuration information is incorrect may be sent to the first wireless device.

In another implementation, it can be learned from the foregoing descriptions that the intelligent reflection surface includes a controller and a plurality of array elements, and each of the plurality of array elements includes an amplitude phase control circuit. Based on this, the first wireless device may send initial configuration information to the controller of the intelligent reflection surface. After receiving the initial configuration information, the controller performs initial configuration an on/off state of each of the plurality of array elements based on the initial configuration information.

For example, the controller may determine, from configuration content based on a configuration mode, an ID of an initial to-be-configured array element, a quantity of bits of bit data included in the configuration content, the configuration content, and an ID of each array element that are included in the initial configuration information, bit data corresponding to each array element, and perform initial configuration, based on the determined bit data corresponding to each array element, an on/off state of an amplitude phase control circuit included in each array element.

For a manner in which the controller determines, from the configuration content included in the initial configuration information, the bit data corresponding to each array element, refer to the foregoing manner in which the signaling communication circuit determines, from the configuration content included in the initial configuration information, the bit data corresponding to the array element. Details are not described in this embodiment of this application again.

After sending the initial configuration information to the intelligent reflection surface, the first wireless device sends the first signal to the intelligent reflection surface. The plurality of array elements in the intelligent reflection surface receive the first signal via an antenna, and the antenna transmits the first signal to the amplitude phase control circuit. After receiving the first signal, the amplitude phase control circuit may adjust a phase and/or an amplitude of the first signal based on a current on/off state of the amplitude phase control circuit. Then, an adjusted first signal is sent to the second wireless device.

For an implementation process in which the amplitude phase control circuit adjusts the phase and/or the amplitude of the received first signal based on the on/off state of the amplitude phase control circuit after the initial configuration, refer to the foregoing specific implementation process in which the amplitude phase control circuit adjusts a phase and/or an amplitude of a second signal based on the on/off state of the amplitude phase control circuit after adjustment based on adjustment information. Details are not described herein again in this embodiment of this application.

In addition, in this embodiment of this application, when the first wireless device is an RFID reader/writer, and the second wireless device is an RFID tag, the first signal may be an inventory command for the RFID reader/writer to inventory the RFID tag.

When the first wireless device is a base station in NB-IoT, and the second wireless device is an NB-IoT terminal, the first signal may be a data obtaining command. For example, when the NB-IoT terminal is a gas meter, the data obtaining command may be used to obtain gas data recorded in the gas meter.

Alternatively, when the first wireless device may be a wireless AP, and the second wireless device is a terminal device that accesses a network through the wireless AP, the first signal may be a signal, such as a sounding signal or a test signal, to be responded by the terminal device. This is not limited in this embodiment of this application.

The foregoing describes the implementation process in which the first wireless device sends the first signal by using the initially configured intelligent reflection surface after performing initial configuration on the intelligent reflection surface. Optionally, in another implementation, the first wireless device may alternatively not perform initial configuration on the intelligent reflection surface, but directly send the first signal to the second wireless device by using the intelligent reflection surface. In this case, after receiving the first signal, each array element in the intelligent reflection surface may adjust a phase and/or an amplitude of the first signal based on an on/off state of the array element at a current moment, and send an adjusted first signal to the second wireless device.

Step 502: Send the adjustment information to the intelligent reflection surface based on response of the second wireless device to the first signal.

After sending the first signal to the second wireless device by using the intelligent reflection surface, the first wireless device may detect, in real time, whether a response signal of the second wireless device to the first signal is received, to determine the response of the second wireless device to the first signal; and send the adjustment information to the intelligent reflection surface based on the response.

For example, if the first wireless device receives no response signal of the second wireless device to the first signal, the first wireless device sends the adjustment information to the intelligent reflection surface based on the initial configuration information.

The first wireless device may start timing when sending the first signal. If no response signal of the second wireless device to the first signal is received within preset duration, it is determined that the second wireless device does not respond. In this case, the first wireless device may generate the adjustment information based on the initial configuration information, and then send the adjustment information to the intelligent reflection surface.

For example, the first wireless device may obtain configuration content in the initial configuration information, and modify the configuration content, to obtain modified configuration content. Then, the adjustment information is generated based on the modified configuration content.

For example, the first wireless device may determine original configuration data corresponding to the configuration content in the initial configuration information, and then add 1 to the original configuration data to obtain modified configuration data. Then, the first wireless device may determine a configuration mode based on the modified configuration data with reference to the foregoing described method for generating the initial configuration information, obtain the modified configuration content based on the configuration mode and the modified configuration data, and generate the adjustment information based on the modified configuration content and the configuration mode.

Optionally, it can be learned from the foregoing descriptions that the simulation software may generate a plurality of pieces of configuration data. In this case, the first wireless device may alternatively obtain, from the plurality of pieces of configuration data, any piece of configuration data in other configuration data than the original configuration data, and further generate the adjustment information based on currently obtained configuration data with reference to the foregoing described method for generating initial configuration information.

After generating the adjustment information, the first wireless device may send the adjustment information to the intelligent reflection surface with reference to the foregoing described method. Correspondingly, the intelligent reflection surface may control on/off states of the plurality of array elements based on the adjustment information. For an implementation of controlling the on/off state of the array element based on the adjustment information, refer to the foregoing implementation of controlling the on/off state of the array element based on the initial configuration information. Details are not described in this embodiment of this application again.

It can be learned from the descriptions in step 501 that before sending the first signal, the first wireless device may alternatively not send the initial configuration information to the intelligent reflection surface. In this case, when the first wireless device receives no response signal of the second wireless device to the first signal, the first wireless device may directly generate the adjustment information, and send the adjustment information to the intelligent reflection surface.

It should be noted that, for a specific implementation in which the first wireless device directly generates the adjustment information, refer to the foregoing generation manner in which the first wireless device generates the initial configuration information. Details are not described herein again in this embodiment of this application.

In another implementation, if the first wireless device receives the response signal of the second wireless device to the first signal, the first wireless device may send the adjustment information to the intelligent reflection surface based on a signal strength of the response signal and the initial configuration information.

For example, the first wireless device may start timing when sending the first signal. If the response signal of the second wireless device to the first signal is received within preset duration, the signal strength of the response signal may be first determined. If the signal strength of the received response signal is not greater than a signal strength threshold, the adjustment information may be generated with reference to the foregoing implementation of generating the adjustment information based on the initial configuration information. Then, the adjustment information is sent to the intelligent reflection surface. If the signal strength of the response signal is greater than a signal strength threshold, sending the adjustment information to the intelligent reflection surface may be stopped.

Optionally, when the first wireless device does not send the initial configuration information to the intelligent reflection surface before sending the first signal, if the signal strength of the received response signal is not greater than the signal strength threshold, the adjustment information for adjusting on/off states of all the array elements included in the intelligent reflection surface may be generated with reference to the foregoing manner of generating the initial configuration information. Then, the adjustment information is sent to the intelligent reflection surface.

**Step 503:** Send a second signal to the second wireless device by using an adjusted intelligent reflection surface.

After sending the adjustment information to the intelligent reflection surface, the first wireless device may send the second signal to the intelligent reflection surface. Correspondingly, after receiving the second signal, the intelligent reflection surface that is adjusted based on the adjustment information may adjust a phase and/or an amplitude of the second signal. Then, an adjusted second signal is sent to the second wireless device.

Subsequently, the first wireless device may continue to detect response of the second wireless device to the second signal, and then determine, based on the response, whether to continue to adjust the intelligent reflection surface. If the intelligent reflection surface continues to be adjusted, the first wireless device may send adjustment information to the intelligent transmit surface again with reference to the manner in step 502. In this case, the sent adjustment information is different from the previous adjustment information and initial configuration information. Then, the first wireless device may continue to send a signal to the second wireless device by using the adjusted intelligent reflection surface, and so on.

In this embodiment of this application, the plurality of array elements in different on/off states included in the intelligent reflection surface can perform different adjustment on a phase and/or an amplitude of a wireless signal sent by the first wireless device. Therefore, the on/off states of the plurality of array elements included in the intelligent reflection surface are adjusted based on the response of the second wireless device to the first signal sent by the first wireless device, so that each of the plurality of array elements can be adjusted to a more appropriate on/off state, and the plurality of array elements can adjust the second signal sent by the first wireless device to a more appropriate phase, to reduce a probability that the second signal is severely attenuated due to reflection of a plurality of reflectors. In this way, an effect of communication between the first wireless device and the second wireless device can be improved.

In addition, each of the plurality of array elements included in the intelligent reflection surface in this embodiment of this application includes the passive IC. The signaling communication circuit is disposed in the passive IC, and an on/off state of a corresponding amplitude phase control circuit may be adjusted by using the signaling communication circuit. In this way, a controller does not need to be disposed in the intelligent reflection surface. This reduces production costs of the intelligent reflection surface.

Further, an energy collection circuit is further disposed in the passive IC included in each array element. The energy collection circuit may collect energy of an electromagnetic wave in an ambient environment, and supply power to the amplitude phase control circuit and the signaling communication circuit by using the collected energy, so that the intelligent reflection surface does not need to be powered by an external power supply. This reduces use costs, and enhances ease of deployment of the intelligent reflection surface.

Finally, a material of an insulation layer of a substrate in the array element included in the intelligent reflection surface in this embodiment of this application may be a flexible material, for example, plastic or paper. This reduces production costs of the intelligent reflection surface, and enhances ease of deployment of the intelligent reflection surface.

In the following, a scenario in which the first wireless device is an RFID reader/writer deployed in a warehouse, the second wireless device is an RFID tag deployed in the same warehouse, and the RFID reader/writer inventories the RFID tag is taken as an example to illustrate the signal sending method provided above. An intelligent reflection surface is the intelligent reflection surface shown in FIG. 2. The intelligent reflection surface may be deployed on a top of the warehouse, or may be deployed on a wall in the warehouse, or may be deployed on a shelf in the warehouse.

Refer to FIG. 6. Before inventorying the RFID tag, the RFID reader/writer may send initial configuration information to the intelligent reflection surface, so that the intelligent reflection surface configures connection/disconnection states of a plurality of array elements of the intelligent reflection surface based on the initial configuration information. Then, the RFID reader/writer determines an identifier of a to-be-inventoried RFID tag from identifiers of a plurality of RFID tags stored in the RFID reader/writer, and uses an RFID tag corresponding to the identifier as the to-be-inventoried RFID tag, where the identifier of the RFID tag may be an ID of the RFID tag. Then, an inventory command carrying the identifier of the to-be-inventoried RFID tag is sent, and timing is started when the inventory command is sent. If a response signal of the to-be-inventoried RFID tag is received within preset duration, it indicates that the RFID tag is inventoried. If no response signal of the to-be-inventoried RFID tag is received within preset duration, it indicates that the RFID tag is not inventoried. Then, the first wireless device may continue to obtain an identifier of one RFID tag from the identifiers of the plurality of RFID tags stored in the first wireless device, use an RFID tag corresponding to the identifier as a new to-be-inventoried RFID tag, send an inventory command carrying the identifier of the new to-be-inventoried RFID tag again, and repeat the foregoing process until an inventory of all RFID tags is completed.

After the inventory for all the RFID tags is completed, the RFID reader/writer may determine whether all the RFID tags are inventoried. If it is determined that response signals of all the RFID tags are received, in other words, if all the RFID tags are inventoried, the inventory process ends. If it is determined that a response signal of at least one RFID tag is not received, adjustment information is sent to the intelligent reflection surface, so that the intelligent reflection surface may adjust, based on the adjustment information, the connection/disconnection states of the plurality of array elements included in the intelligent reflection surface. Then, the RFID reader/writer may inventory all the RFID tags again, or may inventory RFID tags that are not inventoried before, until all the RFID tags are inventoried or all possible adjustment information is sent.

The following describes a signal sending apparatus provided in embodiments of this application.

Refer to FIG. 7. An embodiment of this application provides a signal sending apparatus 700. The apparatus 700 may be used in the first wireless device included in the foregoing signal sending system. The apparatus includes a sending module 701 and an adjustment module 702.

The sending module 701 is configured to perform steps 501 and 503 in the foregoing embodiment.

The adjustment module 702 is configured to perform step 502 in the foregoing embodiment.

Optionally, the sending module 701 is configured to:

send initial configuration information to an intelligent reflection surface, where the initial configuration information is used to perform initial configuration on on/off states of a plurality of array elements; and
send a first signal to a second wireless device by using an initially configured intelligent reflection surface.

Optionally, the adjustment module 702 is configured to:
when no response signal of the second wireless device to the first signal is received, send adjustment information to the intelligent reflection surface based on the initial configuration information.

Optionally, the adjustment module 702 is configured to:

when a response signal of the second wireless device to the first signal is received, send adjustment information to the intelligent reflection surface based on a signal strength of the response signal and the initial configuration information.

Optionally, the adjustment information includes configuration content, a configuration mode, a quantity of to-be-configured array elements, and an initial to-be-configured array element, the configuration content includes a plurality of pieces of bit data configured for the to-be-configured array elements, and the configuration mode indicates a to-be-configured array element corresponding to each of the plurality of pieces of bit data.

Optionally, the first wireless device is a radio frequency identification RFID reader/writer, and the second wireless device is an RFID tag.

Optionally, each of the plurality of array elements includes a passive integrated circuit IC, and the passive IC includes an amplitude phase control circuit and a signaling communication circuit.

The adjustment module 702 is specifically configured to:

send the adjustment information to the signaling communication circuit of each array element, where the signaling communication circuit is configured to control an on/off state of the amplitude phase control circuit based on the adjustment information, and the amplitude phase control circuit is configured to perform, in different states, different adjustment on a phase and/or an amplitude of a to-be-sent signal.

Optionally, the passive IC further includes an energy collection circuit. The energy collection circuit is configured to collect energy of an electromagnetic wave in an ambient environment, and supply power to the amplitude phase control circuit and the signaling communication circuit by using the collected energy.

In conclusion, in this embodiment of this application, the intelligent reflection surface may receive the adjustment information sent by the first wireless device, and adjust the on/off state of the intelligent reflection surface based on the adjustment information. Because the adjustment information is sent by the first wireless device based on the response of the second wireless device to the first signal sent by the first wireless device, the adjustment information may be used to adjust the plurality of array elements included in the intelligent reflection surface to more appropriate on/off states. In this way, the plurality of array elements can adjust the received second signal sent by the first wireless device to a more appropriate phase, to reduce signal attenuation of the second signal caused by reflection of a plurality of reflectors, and improve an effect of communication between the first wireless device and the second wireless device. In addition, each of the plurality of array elements included in the intelligent reflection surface can receive the adjustment information sent by the first wireless device, and adjust the on/off state of the array element based on the adjustment information. In this way, a controller does not need to be disposed in the intelligent reflection surface to receive the adjustment information. This reduces production costs of the intelligent reflection surface.

It should be noted that the foregoing functional module division is merely used as an example for description when the signal sending apparatus provided in the foregoing embodiment sends information. During actual application, the foregoing functions may be allocated to different functional modules for implementation based on a requirement. To be specific, an inner structure of a device is divided into different functional modules to implement all or some of the functions described above. In addition, the signal sending apparatus and signal sending method embodiments provided in the foregoing embodiments belong to a same concept. For a specific implementation process, refer to the method embodiment. Details are not described herein again.

All or some of the foregoing embodiments may be implemented by software, hardware, firmware, or any combination thereof. When software is used to implement embodiments, all or some of embodiments may be implemented in a form of a computer program product. The computer program product includes one or more computer instructions. When the computer instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server or data center to another website, computer, server or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital versatile disc (digital versatile disc, DVD)), a semi-conductive medium (for example, a solid state drive (solid state drive, SSD)), or the like.

A person of ordinary skill in the art may understand that all or some of the steps of embodiments may be implemented by hardware or a program instructing related hardware. The program may be stored in a computer-readable storage medium. The storage medium may be a read-only memory, a magnetic disk, an optical disc, or the like.

The foregoing descriptions are embodiments provided in this application, but are not intended to limit embodi-

EP 4 478 620 A1

ments of this application. Any modification, equivalent replacement, or improvement made without departing from the spirit and principle of embodiments of this application shall fall within the protection scope of embodiments of this application.

**Claims**

1. An intelligent reflection surface, wherein the intelligent reflection surface comprises a plurality of array elements; and each of the plurality of array elements is configured to: when receiving a first signal sent by a first wireless device, send the first signal to a second wireless device; receive adjustment information sent by the first wireless device, wherein the adjustment information is sent by the first wireless device based on response of the second wireless device to the first signal; adjust an on/off state of the array element based on the adjustment information; and when receiving a second signal sent by the first wireless device, send the second signal to the second wireless device.

2. The intelligent reflection surface according to claim 1, wherein each of the plurality of array elements comprises a passive integrated circuit IC, the passive IC comprises an amplitude phase control circuit and a signaling communication circuit, and the signaling communication circuit is connected to the amplitude phase control circuit, wherein

   the signaling communication circuit is configured to receive the adjustment information, and control an on/off state of the amplitude phase control circuit based on the adjustment information; and
   the amplitude phase control circuit is configured to adjust, in an on state, a phase and/or an amplitude of a to-be-sent signal.

3. The intelligent reflection surface according to claim 2, wherein the passive IC further comprises an energy collection circuit, and the energy collection circuit is connected to both the signaling communication circuit and the amplitude phase control circuit; and
   the energy collection circuit is configured to collect energy of an electromagnetic wave in an ambient environment, and supply power to the amplitude phase control circuit and the signaling communication circuit by using the collected energy.

4. The intelligent reflection surface according to claim 2 or 3, wherein each array element further comprises an antenna, and the antenna is configured to transmit a signal adjusted by the amplitude phase control circuit.

5. The intelligent reflection surface according to claim 4, wherein the antenna comprises a metal patch and a substrate, the substrate comprises an insulation layer and a metal layer, one end of the passive IC is connected to the metal patch, and another end of the passive IC is connected to the metal layer of the substrate through the insulation layer of the substrate.

6. The intelligent reflection surface according to claim 5, wherein a material of the insulation layer of the substrate is a flexible material.

7. A signal sending method, applied to a first wireless device, wherein the method comprises:

   sending a first signal to a second wireless device by using an intelligent reflection surface, wherein the intelligent reflection surface comprises a plurality of array elements;
   sending adjustment information to the intelligent reflection surface based on response of the second wireless device to the first signal, wherein the adjustment information is used to adjust on/off states of the plurality of array elements; and
   sending a second signal to the second wireless device by using an adjusted intelligent reflection surface.

8. The method according to claim 7, wherein the sending a first signal to a second wireless device by using an intelligent reflection surface comprises:

   sending initial configuration information to the intelligent reflection surface, wherein the initial configuration information is used to perform initial configuration on the on/off states of the plurality of array elements; and
   sending the first signal to the second wireless device by using an initially configured intelligent reflection surface.

9. The method according to claim 8, wherein the sending adjustment information to the intelligent reflection surface based on response of the second wireless device to the first signal comprises:

17

when receiving no response signal of the second wireless device to the first signal, sending the adjustment information to the intelligent reflection surface based on the initial configuration information.

10. The method according to claim 8, wherein the sending adjustment information to the intelligent reflection surface based on response of the second wireless device to the first signal comprises:
when receiving a response signal of the second wireless device to the first signal, sending the adjustment information to the intelligent reflection surface based on a signal strength of the response signal and the initial configuration information.

11. The method according to any one of claims 7 to 10, wherein the adjustment information comprises configuration content, a configuration mode, a quantity of to-be-configured array elements, and an initial to-be-configured array element, the configuration content comprises a plurality of pieces of bit data configured for the to-be-configured array elements, and the configuration mode indicates a to-be-configured array element corresponding to each of the plurality of pieces of bit data.

12. The method according to any one of claims 7 to 11, wherein the first wireless device is a radio frequency identification RFID reader/writer, and the second wireless device is an RFID tag.

13. The method according to any one of claims 7 to 12, wherein each of the plurality of array elements comprises a passive integrated circuit IC, and the passive IC comprises an amplitude phase control circuit and a signaling communication circuit; and

the sending the adjustment information to the intelligent reflection surface comprises:
sending the adjustment information to the signaling communication circuit of each array element, wherein the signaling communication circuit is configured to control an on/off state of the amplitude phase control circuit based on the adjustment information, and the amplitude phase control circuit is configured to perform, in different states, different adjustment on a phase and/or an amplitude of a to-be-sent signal.

14. The method according to claim 13, wherein the passive IC further comprises an energy collection circuit, and the energy collection circuit is configured to collect energy of an electromagnetic wave in an ambient environment, and supply power to the amplitude phase control circuit and the signaling communication circuit by using the collected energy.

15. A signal sending apparatus, used in a first wireless device, wherein the apparatus comprises:

a sending module, configured to send a first signal to a second wireless device by using an intelligent reflection surface, wherein the intelligent reflection surface comprises a plurality of array elements; and
an adjustment module, configured to send adjustment information to the intelligent reflection surface based on response of the second wireless device to the first signal, wherein the adjustment information is used to adjust on/off states of the plurality of array elements, wherein
the sending module is further configured to send a second signal to the second wireless device by using an adjusted intelligent reflection surface.

16. The apparatus according to claim 15, wherein the sending module is configured to:

send initial configuration information to the intelligent reflection surface, wherein the initial configuration information is used to perform initial configuration on the on/off states of the plurality of array elements; and
send the first signal to the second wireless device by using an initially configured intelligent reflection surface.

17. The apparatus according to claim 16, wherein the adjustment module is configured to:
when no response signal of the second wireless device to the first signal is received, send the adjustment information to the intelligent reflection surface based on the initial configuration information.

18. The apparatus according to claim 16, wherein the adjustment module is configured to:
when a response signal of the second wireless device to the first signal is received, send the adjustment information to the intelligent reflection surface based on a signal strength of the response signal and the initial configuration information.

19. The apparatus according to any one of claims 15 to 18, wherein the adjustment information comprises configuration content, a configuration mode, a quantity of to-be-configured array elements, and an initial to-be-configured array element, the configuration content comprises a plurality of pieces of bit data configured for the to-be-configured array elements, and the configuration mode indicates a to-be-configured array element corresponding to each of the plurality of pieces of bit data.

20. The apparatus according to any one of claims 15 to 19, wherein the first wireless device is a radio frequency identification RFID reader/writer, and the second wireless device is an RFID tag.

21. The apparatus according to any one of claims 15 to 20, wherein each of the plurality of array elements comprises a passive integrated circuit IC, and the passive IC comprises an amplitude phase control circuit and a signaling communication circuit; and
the adjustment module is specifically configured to:
send the adjustment information to the signaling communication circuit of each array element, wherein the signaling communication circuit is configured to control an on/off state of the amplitude phase control circuit based on the adjustment information, and the amplitude phase control circuit is configured to perform, in different states, different adjustment on a phase and/or an amplitude of a to-be-sent signal.

22. The apparatus according to claim 21, wherein the passive IC further comprises an energy collection circuit, and the energy collection circuit is configured to collect energy of an electromagnetic wave in an ambient environment, and supply power to the amplitude phase control circuit and the signaling communication circuit by using the collected energy.

23. A computer-readable storage medium, wherein the computer-readable storage medium stores instructions, and when the instructions are run on a computer, the computer is enabled to perform the signal sending method according to any one of claims 7 to 14.

FIG. 1

FIG. 2

Passive IC 1211

FIG. 3

FIG. 4

Send a first signal to a second wireless device by using an intelligent reflection surface ⟋ 501

Send adjustment information to the intelligent reflection surface based on response of the second wireless device to the first signal ⟋ 502

Send a second signal to the second wireless device by using an adjusted intelligent reflection surface ⟋ 503

FIG. 5

An RFID reader/ writer sends initial configuration information → The RFID reader/ writer sends an inventory command → An RFID tag sends a response signal → The RFID reader/ writer receives the response signal, and generates adjustment information

FIG. 6

Signal sending apparatus 700

Sending module ⟋ 701

Adjustment module ⟋ 702

FIG. 7

## INTERNATIONAL SEARCH REPORT

| International application No. |
|---|
| **PCT/CN2023/083400** |

### A. CLASSIFICATION OF SUBJECT MATTER

H04B 7/0426(2017.01)i

According to International Patent Classification (IPC) or to both national classification and IPC

### B. FIELDS SEARCHED

Minimum documentation searched (classification system followed by classification symbols)

IPC: H04B; H04W; H04L

Documentation searched other than minimum documentation to the extent that such documents are included in the fields searched

Electronic data base consulted during the international search (name of data base and, where practicable, search terms used)

CNTXT; CNKI; VEN; ENTXTC; 3GPP: 智能表面, 超表面, 超材料, 可编程, 可重构, 调整, 调节, 更新, 控制, 相位, 幅度, 相移, 配置, 比特, intelligent reflecting surface, reconfigurable intelligent surface, IRS, RIS, adjust+, updat+, control+, phase, amplitude, configur+, bit

### C. DOCUMENTS CONSIDERED TO BE RELEVANT

| Category* | Citation of document, with indication, where appropriate, of the relevant passages | Relevant to claim No. |
|---|---|---|
| Y | CN 113795004 A (HUNAN CASTKING FOUNDRY TECHNOLOGY CO., LTD.) 14 December 2021 (2021-12-14) <br> description, paragraphs 17-38 | 1-23 |
| Y | CN 113810083 A (HUAWEI TECHNOLOGIES CO., LTD.) 17 December 2021 (2021-12-17) <br> description, paragraphs 99 and 203-287 | 1-23 |
| A | CN 111211824 A (SOUTHEAST UNIVERSITY) 29 May 2020 (2020-05-29) <br> entire document | 1-23 |
| A | CN 112910807 A (HUAZHONG UNIVERSITY OF SCIENCE AND TECHNOLOGY) 04 June 2021 (2021-06-04) <br> entire document | 1-23 |
| A | WO 2021236510 A1 (GOOGLE L.L.C.) 25 November 2021 (2021-11-25) <br> entire document | 1-23 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **16 June 2023** | **21 June 2023** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/083400**

| Patent document cited in search report | | | Publication date (day/month/year) | Patent family member(s) | | | Publication date (day/month/year) |
|---|---|---|---|---|---|---|---|
| CN | 113795004 | A | 14 December 2021 | None | | | |
| CN | 113810083 | A | 17 December 2021 | None | | | |
| CN | 111211824 | A | 29 May 2020 | None | | | |
| CN | 112910807 | A | 04 June 2021 | None | | | |
| WO | 2021236510 | A1 | 25 November 2021 | AU | 2021277195 | A1 | 10 November 2022 |
| | | | | EP | 4014333 | A1 | 22 June 2022 |
| | | | | KR | 20220156599 | A | 25 November 2022 |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210314023